(19) Europäisches Patentamt
European Patent Office
Office européen des brevets

(11) **EP 4 749 527 A1**

(12) **EUROPEAN PATENT APPLICATION**

(43) Date of publication:
**27.05.2026 Bulletin 2026/22**

(21) Application number: **24306952.3**

(22) Date of filing: **22.11.2024**

(51) International Patent Classification (IPC):
**G06N 3/0475** (2023.01)     **G06N 20/00** (2019.01)

(52) Cooperative Patent Classification (CPC):
**G06N 20/00; G06N 3/0475; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **OVH**
**59100 Roubaix (FR)**

(72) Inventors:
- **LOISEAU, Lucien**
  **44000 Nantes (FR)**
- **MAIRE, Quentin**
  **69001 Lyon (FR)**

(74) Representative: **BCF Global**
**17-21, rue Saint-Fiacre**
**75002 Paris (FR)**

(54) **METHOD AND SYSTEM FOR SELECTING A MACHINE-LEARNING MODEL FROM A SET OF MACHINE-LEARNING MODELS**

(57)     The technology relates to a computer-implemented method and system for generating content to a user, comprising:
- receiving an input prompt from the user;
- accessing a first machine-learning (ML) model;
- accessing a second ML model, distinct from the first ML model;
- generating a first output by inputting to the first ML model at least a portion of the input prompt;
- generating a second output by inputting to the second ML model the at least a portion of the input prompt;
- comparing the first output with the second output;
- selecting one of the first and second ML models as a selected ML model to be used for generation of content to the user;
- generating content to the user; and
- outputting the content to the user.

FIG. 3

## Description

### FIELD

The present technology generally relates to operating machine-learning models.

### BACKGROUND

The development of language models (LMs) and large language models (LLMs) marks a significant milestone in the field of artificial intelligence. Over the past decade, advancements in machine learning, particularly in deep learning techniques, have enabled these models to process and generate human-like content, such as text, with unprecedented accuracy.

Each LLM offers varying degrees of quality or accuracy; bigger models tend to be overall better, but may be outperformed on certain use cases by smaller expert models, such as users can be lost without knowing which model to interact with. Another drawback of the prior art is that some models imply more energy consumption than others, depending on the power of the processing units on which the model is executed.

The subject matter discussed in the background section should not be assumed to be prior art merely as a result of its mention in the background section. Similarly, a problem mentioned in the background section or associated with the subj ect matter of the background section should not be assumed to have been previously recognized in the prior art. The subject matter in the background section merely represents different approaches.

### SUMMARY

Embodiments of the present technology have been developed based on certain drawbacks associated with the prior art.

According to a first broad aspect of the present technology, there is provided a computer-implemented method for generating content to a user, comprising the following steps:

- receiving an input prompt from the user;

- accessing a first machine-learning (ML) model;

- accessing a second ML model, distinct from the first ML model;

- generating a first output by inputting to the first ML model at least a portion of the input prompt, the first output comprising a first series of tokens and a first series of probabilities associated with the first series of tokens;

- generating a second output by inputting to the second ML model the at least a portion of the input prompt, the second output comprising a second series of tokens and a second series of probabilities associated with the second series of tokens;

- comparing the first output with the second output;

- selecting, based on the comparison of the first and second outputs, one of the first and second ML models as a selected ML model to be used for generation of content to the user;

- generating, by the selected one of the first and second ML models, based on the input prompt, content to the user; and

- outputting the content to the user.

The present technology ensures a dynamical routing of chat requests to the most suited model amongst a set of given candidates of models.

In some implementations of the method, accessing the first and/or second ML models is executed by:

- accessing a processor and a computer-readable memory coupled to the processor that operates the first and/or second ML models; and/or
- querying an Application Programming Interface (API) which in turn queries one of the first and/or second ML models.

In some implementations of the method, comparing the first output with the second output comprises:

- computing a first score associated with the first ML model;

- computing a second score associated with the second ML model; and

- determining which one of the first and second scores is the highest or the lowest.

In some implementations of the method, the computing of the first score and/or the computing of the second score comprises:

- multiplying at least some probabilities of the first series of probabilities; and

- multiplying at least some probabilities of the second series of probabilities.

In some implementations of the method, the computing of the first score and/or the computing of the second score comprises:

- summing a logarithm of at least some probabilities of the first series of probabilities; and

- summing a logarithm of at least some probabilities of the second series of probabilities.

In some implementations of the method, the number of tokens of the first series of tokens and the number of tokens of the second series of tokens is fixed or variable.

In some implementations of the method, the number of tokens of the first series of tokens and the number of tokens of the second series of tokens is comprised between 5 and 20.

In some implementations of the method, the computing of the first score and/or the computing of the second score comprises associating a first weight to the first score and a second weight to the second score.

In some implementations of the method, at least one of the first and second weights are computed by executing:

- prompting each one of the first and second ML models with the input prompt;

- generating the first output by the first ML model;

- generating the second output by the first ML model;

- outputting the first and second outputs to the user;

- obtaining, from the user, a classification of the first and second outputs; and

- adjusting the first and second weights based on the classification of the first and second outputs.

In some implementations of the method, the ML models operate from 8 to 13 billions operations.

In some implementations of the method, selecting one of the first and second ML models further comprises:

- associating an expertise domain to the input prompt;

- assessing metadata (model card) associated with the first and second ML models, the metadata comprising indications of one or more expertise domains associated with the first and second ML models; and

- selecting the one of the first and second ML models based on a similarity of the expertise domain associated with the input prompt and the indications of the metadata associated with the first and second ML models.

The present technology also relates to a computer-implemented system configured to perform the method as already described.

The present technology also related to a computer-readable medium comprising instructions causing to perform the method as already described.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

For a better understanding of the present technology, as well as other aspects and further features thereof, reference is made to the following description which is to be used in conjunction with the accompanying drawings, where:

FIG. 1 is a block diagram illustrating an exemplary system for automatically generating and editing text as executed by a LM or a LLM;

FIG. 2 is a block diagram illustrating an exemplary system for selecting a model;

FIG. 3 is a flow diagram illustrating an exemplary process for generating text and performing editing or insertion of text using a language model-based approach with a selection of one of the models of the pool P, according to some embodiments of the present disclosure; and

FIG. 4 is a block diagram of modules that can implement the method of FIG. 3 in accordance with some non-limiting implementations of the present technology.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative systems embodying the principles of the present technology.

With these fundamentals in place, we will now consider some non-limiting examples to illustrate the implementations of the various inventive aspects of the present disclosure.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and/or implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP) or quantum processing unit (QPU). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

With these fundamentals in place, we will now consider some non-limiting examples of the present technology.

**Machine-learning model**

The present disclosure relates to artificial intelligence (AI). As is known, AI may involve hardware and/or software for perceiving, synthesizing, inferring, predicting and/or generating information using computerized tools and techniques (e.g., machine learning, ML).

More specifically, the present disclosure relates to the use of AI-based models (models), as will be detailed later. A given AI-based model may have a particular configuration (e.g., model parameters and relationships between those parameters) encompassing an initial configuration, that can change over time as the model learns from input data (e.g., training input data), which allows the model to improve its abilities. For example, a dataset may be input to a model, which may produce an output based on the dataset and the configuration of the model itself. Then, based on additional information (e.g., an additional input dataset, validation data, reference data, feedback data), the model may deduce and automatically implement a change to its configuration that will lead to an improved output.

As is known, multiple AI-based models have been developed which are very powerful, thanks to sufficiently large datasets as well as sufficient computing power.

More specifically, the present disclosure relates to the use of language models (LMs) that are capable of performing tasks, such as, involving understanding or generating natural language or code. The model may be used to edit text given a prompt from a user, thus providing a natural communication interface. Illustrative embodiments of the present disclosure are described below. While some embodiments may be described with respect to "text" or "code," it should be noted that such embodiments may apply to both text and code (e.g., computer code), as well as any digital information comprising one or more characters.

Language Models and Large Language Models (LLMs) are a type of AI-base models designed to understand and generate human language or code. These models are trained on vast amounts of text data, learning statistical relationships between words and phrases through self-supervised and semi-supervised learning processes1. LMs and LLMs can perform a variety of tasks, such as answering questions, summarizing texts, writing code, and translating languages. They often achieve this by predicting the next word in a sequence based on the context provided by the preceding words. Examples of LLMs include OpenAI's GPT-4, Google's PaLM, and Meta's LLaMA.

LMs and LLMs are artificial neural networks that can be non limitatively built with a decoder-only transformer based architecture as was introduced in a paper called "Attention Is All You Need" paper. This paper, published by Google researchers in 2017, introduced the Transformer architecture, which relies heavily on attention mechanisms and has since become a foundational model for many LLMs.

The Transformer architecture has been widely adopted because it allows for more efficient training and better performance on a variety of tasks compared to previous models like recurrent neural networks (RNNs) and convolutional neural networks (CNNs). Examples of LLMs based on this architecture include OpenAI's GPT series, Google's BERT, and Meta's LLaMA2.

There are other architectures and approaches in the field of AI and natural language processing. Some models might incorporate different mechanisms or hybrid approaches, but the Transformer remains a dominant and influential architecture in the development of LLMs.

As will be later explained, the present disclosure relates to LMs that can be large (LLMs) or that can be smaller. Smaller language models can still perform many useful tasks, especially when they are fine-tuned for specific applications. These smaller models are often more efficient and require less computational power and memory, making them suitable for deployment in resource-constrained environments like mobile devices or embedded systems. For example, models like DistilBERT and TinyBERT are smaller versions of the BERT model, designed to retain much of the performance of their larger counterparts while being more efficient. These models are particularly useful for tasks such as text classification, sentiment analysis, and named entity recognition.

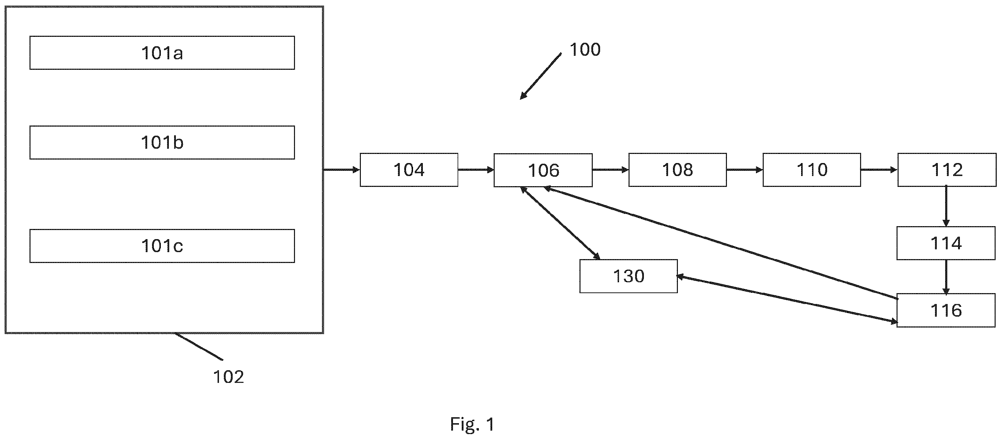

FIG. 1 is a block diagram illustrating an exemplary system for automatically generating and editing text as executed by a LM or a LLM.

As can be seen from this figure, system 100 can include data input engine 102 . Data input engine 102 may obtain data directly from external users. Data input engine 102 may obtain user input data 101 a, comprising text data in the form of a sentence, a phrase, a paragraph, or any combination of characters. Input data 101 a may include at least one of user-labeled data, unlabeled data, or publicly available data (which may or may not be labeled). In some embodiments, user input data may comprise computer code. In some embodiments, user input data may comprise an input text prompt. Additionally or alternatively, user input data may comprise of a null set (e.g., having no user input or no natural language input). Data input engine 102 may obtain user instructions 101b, comprising text data in the form of at least one of a sentence, a paragraph, or a user prompt. A user instruction may include at least one of an instruction, a defined task, or any combination of parameters that set one or more constraints on language model output. In some embodiments, user instructions may include user-specified natural language instructions. In some embodiments, user input data or user instruction may correspond to a particular language model application framework (e.g., which may include a digital text pattern, format, structure, or style). In some embodiments, an Application Programming Interface (API) may define the particular language model application framework, as will be detailed later. Data input engine 102 may also obtain a set of model parameters 101c. In some embodiments, model parameters may comprise one or more of a tone (e.g., stem, kind, funny), a structure (e.g., prose, free narrative), or format (e.g. poem, formal letter) associated with the input data. In some embodiments, model parameters may comprise properties associated with an author of the input text prompt (e.g., gender, point-of-view).

System 100 can further include data normalization engine 104. Data normalization engine 104 may perform tokenization of input data. Data normalization engine 104 may also perform lemmatization, stemming, and part-of-speech tagging of input data. In some embodiments, data normalization engine 104 may perform normalization based on the length of user input data as exemplified by 101a or the desired length of output based on a user instruction as exemplified by 101 b. In some embodiments, data normalization engine 104 may perform normalization based on a set of model parameters as exemplified by 101c . In some embodiments, a language model application framework may correspond to at least one of generation, open Question-Answer (QA), closed QA, brainstorming, chat, rewriting, summarization, classification, extraction, or other.

System 100 can further include language model (LM) access engine 106 . Language model access engine 106 may access a language model from language model based on one or more desired output behaviors or user intent derived from the set of user instructions as in 101b . In some embodiments, language model access engine 106 may access a language model based on a set of model parameters 101 c. In some embodiments, language model access engine 106 may access a language model based on the output of a sentiment analysis. In some embodiments, language model access engine 106 may access the language model based on a training dataset as exemplified by training datasets 130, which may include sample data input. In some embodiments, the training dataset may also include sample output data based on the sample data input. In some embodiments, the training dataset may also include annotated data, labeled data, or other types of enriched data. In some embodiments, accessing the language model may include at least one of adding, removing, modifying a model parameter of the language model, or any other model training operation discussed below. For example, language model access engine 106 may add, deactivate or remove a node and/or layer of the model. As another non-mutually exclusive example, language model access engine 106 may add or remove a connection between nodes within the language model. In some embodiments, Language model access engine106may execute (e.g., perform) access of the language model based on a set of demonstration data. In some embodiments, language model access engine 106 may use the demonstration data as validation data to determine quality scores or other metrics of model output, to train a language model to generate improved digital text outputs. In some embodiments, language model access engine 106 may execute (e.g., perform) alignment using a machine learning algorithm. In some embodiments, the machine learning algorithm may include a reinforcement learning algorithm, such as proximal policy optimization. In some embodiments, aligning the language model may include maximizing a helpfulness metric of one or more model outputs. In some embodiments, a helpfulness metric of the one or more outputs may be computed (e.g., by at least one processor) based on user-labeled data (e.g., by executing one or more comparisons between one or more outputs and user-labeled data associated with respective helpfulness metrics). In some embodiments, aligning the language model may include maximizing an outcome metric of one or more model outputs. In some embodiments, the outcome metrics of the one or more outputs may be computed based on user-labeled data (e.g., by executing one or more comparisons between one or more outputs and user-labeled data associated with respective outcome metrics). In some embodiments, the language model may be configured to output the language model output text based on at least one of a sampling temperature parameter or a nucleus sampling parameter. In some embodiments, the language model may be configured to output text by selecting text (e.g., word sequences) based on the probability of the output text in a probability distribution of a sampling temperature parameter or a nucleus sampling parameter. In some embodiments, the outcome metric may be associated with (e.g., represent, indicate, comprise) maximization of output based on the output of context analysis based on context analysis engine 108 . In some embodiments, the outcome metric may be associated with (e.g., represent, indicate, comprise) maximization of output based on the output of sentiment analysis.

System 100 can further include context analysis engine 108. Context Analysis Engine 108 may receive normalized input data and user instructions from Data Input Engine 102 . In some embodiments, context analysis engine 108 may analyze the input data and/or the user instructions to output a set of context parameters associated with the input data. For instance, the set of context parameters may comprise a location ("where"), a person ("who"), a time period or time of day ("when"), an event ("what"), or causal reasoning ("why") associated with the input data. In some embodiments, context analysis engine 108 may retain the output of the set of context parameters through multiple iterations of editing as performed by text editing engine 110, allowing for retention of context information for changes (e.g., local edits) without needing reload large amounts of information.

System 100 can further include text editing engine 110. Text editing engine 110 may perform editing of the input data 101a based on the set of user instructions 101b. In some embodiments, Text editing engine 110 may perform editing of the input data 101 a based on the set of model parameters 101c. For instance, if the model parameter comprises a tone of voice (e.g., stern, kind, funny) or a tone of voice is detected from sentiment analysis, text editing engine 110 may edit the input data accordingly in the desired tone. In some embodiments, text editing engine 110 may perform editing of the input data 101 a based on the output of context analysis engine 108. For instance, text editing engine 110 may change properties associated with the author of the input data (e.g., the gender, the point-of-view of the author) based on identification from the output of context analysis engine 108. In some embodiments, text editing engine 110 may perform local or minor changes to the input data (e.g., in the form of a few words or letters) based on the context (e.g., the enclosing sentence or paragraph) as determined by the context analysis engine 108.

System 100 can further include output generation engine 112. Output generation engine 112 may receive a set of edited data from Text Editing Engine 110 and output the edited data to at least one of another engine, another system, or a device (e.g., a user device). In some embodiments, the length of the output data is constrained by a length parameter of the language model, which may set a fixed or variable limit on the length of output data (e.g., generated text or code). In some embodiments, the length parameter may be influenced by a user input (e.g., input at a user device). For instance, the length of the output data may be constrained to be equivalent to the length of the input data, or to be proportional (e.g., $2\times$) to the length of the input data. As another example, the length of the output data may be constrained to be less than or equal to a fixed number of characters, words, or sentences, or combination thereof.

System 100 can further include output validation engine 114. In some embodiments, output validation engine 114 may receive a set of model outputs, user-labelled outputs, or a set of comparison data. Output validation engine 114 may execute a ranking of the received model outputs based on the set of user instructions, the output from context analysis engine 108, or the output from sentiment analysis. In some embodiments, output validation engine 114 may also rank the received model outputs based on an outcome metric. In some embodiments, output validation engine 114 may rank the received outputs based on a proximity metric to one or more desired output behaviors.

System 100 can further include LM optimization engine 116. LM optimization engine 116 may perform optimization by aligning or fine-tuning a language model from language model access engine 106, based on one or more desired output behaviors or user intent derived from a set of user instructions as in 101b. In some embodiments, LM optimization engine 116 may align a language model based on the output of sentiment analysis. In some embodiments, LM optimization engine 116 may align the language model based on a training dataset as exemplified by training datasets 130, which may include sample data input. In some embodiments, the training dataset may also include sample output data based on the sample data input. In some embodiments, the training dataset may also include at least one of annotated data, labeled data, or other types of enriched data. In some embodiments, aligning the language model may include at least one of adding, removing, modifying a model parameter of the language model, or any other model training operation. For example, the at least one processor may add, deactivate, or remove a node and/or layer of the model. As another non-mutually exclusive example, the at least one processor may add or remove a connection between nodes within the language model. In some embodiments, LM optimization engine 116 may execute (e.g., perform) the alignment of the language model based on a set of demonstration data. In some embodiments, LM optimization engine 116 may use the demonstration data as validation data to determine quality scores or other metrics of model output, to train a language model to generate improved digital text outputs. In some embodiments, LM optimization engine 116 may execute (e.g., perform) alignment using a machine learning algorithm. In some embodiments, the machine learning algorithm may include a reinforcement learning algorithm, such as proximal policy optimization. In some embodiments, aligning the language model may include maximizing a helpfulness metric of one or more model outputs. In some embodiments, a helpfulness metric of the one or more outputs may be computed based on user-labeled data (e.g., by executing one or more comparisons between one or more outputs and user-labeled data associated with respective helpfulness metrics). In some embodiments, aligning the language model may include maximizing an outcome metric of one or more model outputs. In some embodiments, the outcome metrics of the one or more outputs may be computed based on user-labeled data (e.g., by executing one or more comparisons between one or more outputs and user-labeled data associated with respective outcome metrics).

## Routing module

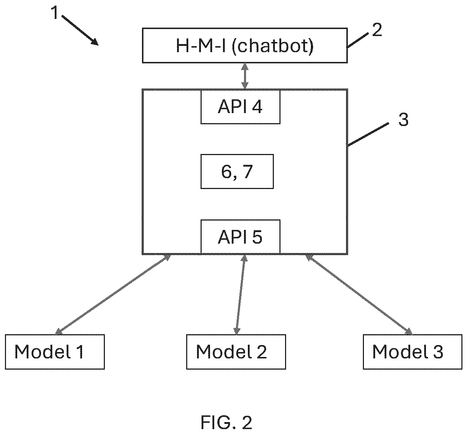

FIG. 2 is a block diagram illustrating an exemplary system for selecting a model.

As can be seen from this figure, the system 1 comprises a human-machine interface 2 configured to communicate to a routing module 3. The routing module 3 is configured to communicate both with the human-machine interface 2 and with machine-learning models M1, M2, M3.

The human-machine interface 2 can be of any appropriate configuration as long as a user can enter a query. For instance, the human-machine interface 2 can be a chatbot platform. In some embodiments, the query is a prompt. In some embodiments, alternatively or additionally, the human-interface 2 comprises an input data engine similar to the input data engine 102 as already described in reference to figure 1 and/or a data normalization engine 104 similar to the data normalization engine 104 already described in reference to figure 1.

In some embodiments, the routing module 3 comprises a first Application Programming Interface (API) 4 to receive the user query and a second API 5 to send the query to each of the models. The first and second API can be distinct from one from another or can form only one API. Alternatively or additionally, in some embodiments, the routing module 3 comprises a processor 6 and a computer-readable memory 7 coupled to the processor that operates the models M1, M2, M3. Alternatively or additionally, in some embodiments, the routing module 3 is a ML model.

In some embodiments, models M1, M2 and M3 are LMs or LLMs. Each of the models M1, M2, M3 can comprise a system 100 for automatically generating and editing text as already described in relation to figure 1. In some embodiments, both the human-machine interface 2 and the models M1, M2, M3 comprise each the input data engine 102 and/or the normalization engine 104. In some embodiments, alternatively or additionally, only the human-machine interface 2 comprises the input data engine 102 and/or the normalization engine 104 while some or all of the models are deprived of the user instructions 101 b of the input data engine 102 and/or the normalization engine 104.

The present disclosure is not limited to a pool P of three ML-models M1, M2, M3. The system 1 can comprise as many models as necessary but comprises a minimum of two ML-models M1 and M2. The number and specific choice of the models can be either fixed or change over time, as will be detailed later. Examples of models M1, M1 M3 include Meta's LLaMA series, Mistral's series, and/or Qwen's series.

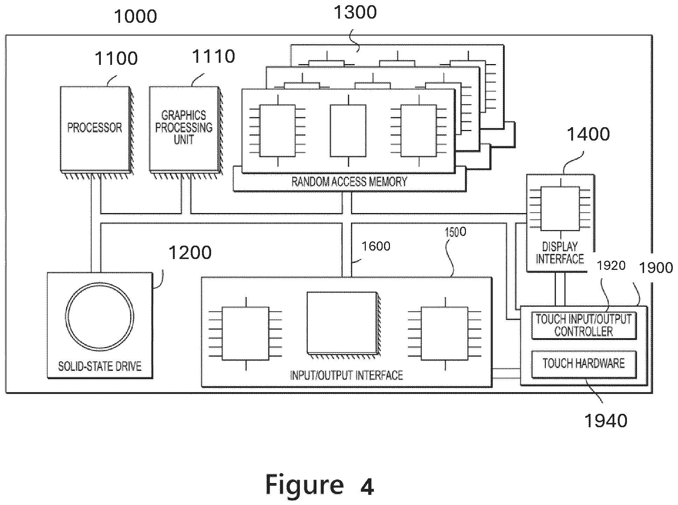

The routing module 3 also comprises a selecting engine to select one of the models M1, M2, M3 of the pool P for each users query. The selecting engine comprises a processor and a computer-readable memory coupled to the processor. The processor and computer-readable memory can be the same respectively as the processor 6 and computer-readable memory 7 or can be distinct from them. In some embodiments, the processor 8 and computer-readable memory 9 belong to a computing device 1000 that will be described in relation to figure 4.

## Method for selecting a model

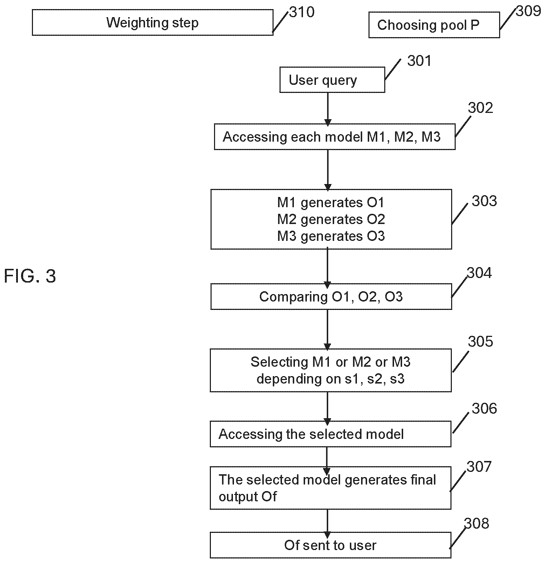

FIG. 3 is a flow diagram illustrating an exemplary process for generating text and performing editing or insertion of text using a language model-based approach with a selection of one of the models of the pool P, according to some embodiments of the present disclosure.

Process 300 can be performed (e.g., executed) by a system, such as system 2 of FIG. 2 and/or system 100 of FIG. 1, or any computing device. In some embodiments, process 300 can be implemented using at least one processor (e.g., processor 1100 of FIG. 4), which may execute one or more instructions that can be stored on a computer-readable medium (e.g., storage device 1300 of FIG. 4). While the steps in figure 3 are shown in a particular exemplary order, it is appreciated that the individual steps may be reordered, omitted, and/or repeated.

In some embodiments, process 300 begins at step 301. At step 301, at least one processor may receive a user query. The user query may be an input text prompt, which may include an amount of text, which may have been input at a human-machine interface (e.g., to a user interface linked to a language model through an API). For example, the user query may include one or more of a user-written or machine-written prompt, a user-written or machine-written instruction, web-crawled text, or any other text data (e.g., one or more words, phrases, sentences, or paragraphs). The user query may contain questions or instructions.

At step 302, the routing module accesses each of the models M1, M2, M3 of the pool P to query each of them with the user query or at least a portion of the user query. In some embodiments, and accessing the ML models is executed by accessing the processor and the computer-readable memory coupled to the processor. In some embodiments, alternatively or additionally, accessing the ML models is executed by querying the API which in turn queries each model of the pool P.

At step 303, each of the models M1, M2, M3 generates a respective output O1, O2, O3 comprising a respective series of tokens and a respective series of probabilities associated with the respective series of tokens, as will be detailed. Steps 302 and 303 are called pre-query.

At step 304, the routing module compares the outputs O1, O2, O3 on the basis of the respective series of probabilities, as will be detailed.

At step 305, the routing module selects one of the models M1, M2, M3, based on the comparison of the outputs O1, O2, O3.

At step 306, the routing module accesses the selected model to query the selected model with the (total) user query. In some embodiments, and accessing the selected ML model is executed by accessing the processor and the computer-readable memory coupled to the processor. In some embodiments, alternatively or additionally, accessing the selected ML model is executed by querying the API which in turn queries the selected model.

At step 307, the selected model generates an output, called final output Of.

At step 308, the routing module outputs the content to the user.

The description now focuses on the pre-query steps 302, 303, and the comparison and selection steps 304, 305.

In some embodiments, the comparison step 304 is executed by comparing the outputs 01, 02, O3 of the pre-query upon at least one given criterion, and the selection step 305 is executed by selecting the model M1 or M2 or M3 that satisfies the criterion. The criterion can be a score, as will be detailed.

## Tokens

As already explained, each output O1, O2, O3 comprises a series of tokens, the model generating a probability of each token. As is known, a token refers to a unit of text that a model processes. Tokens can be words, parts of words, or characters, depending on the tokenization method used. For instance:

- a word-based tokenization approach, each word is treated as a separate token;

- in subword tokenization, common prefixes or suffixes may be split into individual tokens, allowing the model to handle rare words more effectively;

- in character-based tokenization, each character is treated as a separate token.

Said differently, each model generates text one token at a time, and each time, a token is generated out of several potential output tokens which form the vocabulary of that model. The selection of these output tokens are based on probability scores of the tokens in the vocabulary using various strategies or user/developer defined parameters. When an LM processes a sequence of tokens, it analyzes the context provided by the preceding tokens. In some embodiments, as is known, the models use a mathematical function called the softmax to convert the raw output scores, called logits, for each possible next token into probabilities. This ensures that the sum of all probabilities is 1. The softmax function generates a probability distribution over the entire vocabulary, indicating the likelihood of each token being the next one in the sequence.

## Score

The step 302 comprises determining a model score s1, s2, s3 for each model M1, M2, M3. In some embodiments, the model score is calculated by multiplying at least some of the probabilities of the tokens and/or summing a logarithm of at least some of the probabilities of the tokens.

In some embodiments, the model score s1, s2, s3 is calculated taking into account a confidence or a perplexity score of the model. Perplexity and confidence are metrics used to evaluate language models, indicating model confidence in its prediction of a sample of text.

A confidence score indicates the model's level of certainty regarding its predictions or outputs. The confidence score is represented as a probability value between 0 and 1, where a higher score suggests greater confidence in the correctness of a generated response.

A perplexity score indicates the model's level of uncertainty regarding its predictions or outputs. The perplexity score is represented as a probability value between 0 and 1, where a lower score suggests greater confidence in the correctness of a generated response. Said differently, perplexity quantifies the average likelihood of the model assigning to the next token in a sequence.

There is an inverse relationship between perplexity and confidence; as perplexity decreases, confidence in the model's predictions increases. The relationship between perplexity and confidence can be exact inverse or, alternatively, not exactly inverse but rather reflects a more complex mathematical relationship.

For instance, the perplexity score can be calculated as the exponential of the negative log probability of the predicted tokens X:

$$PPL(X) = exp\left\{-\frac{1}{t}\sum_{i}^{t} log p_{\theta}(x_i|x_{<i})\right\} \quad,$$

where $log p_{\theta}(x_i|x_{<i})$ is the log likelihood, i.e., probability cumulated until token i, $\frac{1}{t}\sum_{i}^{t} log p_{\theta}(x_i|x_{<i})$ gives the average of the log likelihood and $exp\left\{-\frac{1}{t}\sum_{i}^{t} log p_{\theta}(x_i|x_{<i})\right\}$ normalizes the negative log likelihood.

The comparison step comprises extracting a model score from a score taking into account the probabilities of the tokens. In some embodiments, the model score is the perplexity score PPL(X). In some embodiments, the model score is the confidence score. In some embodiments, the model score uses weights, as will be detailed later.

The selection step comprises selecting the model whose score is the highest or the lowest. In some embodiments, the model score that can be used is the confidence score, in which case the selected model is the model with the highest confidence score. In some embodiments, the model score that can be used is the perplexity score, in which case the selected model is the model with the lowest perplexity score: $s = min_{i=1,...,N}$

For instance, the first model M1 has the perplexity score s1(PPL(M1)), the second model M2 has the perplexity score s2(PPL(M2)) and the third model has the perplexity score s3(PPL(M3)), such that s1<s2<s3. In this example, the model that is selected is M1, $s = s1 = min_{i=1,...,3}$.

In some embodiments, the number of tokens that are being generated for the pre-query steps is fixed. In some embodiments, the number of tokens that are being generated for the pre-query steps is variable. In such embodiment, the tokens may be generated in batches of token which size may be increased up until determination is made that the number of tokens is sufficient to ensure a required accuracy, for example a required accuracy of the perplexity score to be calculated. For example, a first batch of 5 tokens is generated, determination is then made that those 5 tokens are not sufficient to meet a minimum accuracy threshold, then a second batch of 10 tokens is generated. At this stage, a total of 15 tokens have been generated thereby improving accuracy of for proper calculation of the perplexity score. In some embodiments, the number of tokens may be comprised between 5 and 20. The number of tokens can be adapted as needed, as a compromise between latency (the higher the number of tokens in the pre-query, the greater the delay), charge/energy (because the pre-query is sent to all candidate models, the greater the number of tokens, the more energy/charge it consumes), and precision (the higher the number of tokens in the preflight query, the better the estimation of the confidence of the models).

In some embodiments, the number of tokens being taken into account is chosen to be small, such that the outputs O1, O2, O3 are non complete outputs. In other words, the pre-query presents the advantage to be cost effective, as well as time saving and energy saving.

After the selection of the model, only the model that is selected gives a complete output.

It should be noted that method 300 is reiterated for each subsequent user query. In some embodiments, the number of tokens

## Models

In some embodiments, all of the models are LLMs. In some embodiments, some of the models are LMs while some of the models are LLMs. In some embodiments, all of the models are LM. LM are smaller models, meaning they operate with fewer parameters:

In some embodiments, each or some of the ML models M1, M2, M3 of the pool P operate from 10 millions parameters to 100 millions parameters, and/or 80 millions parameters from 1 billion parameters, and/or from 1 billion to 100 billion parameters, and/or from 100 billion to 175 billion parameters.

In some embodiments, alternatively or additionally, in terms of model size, each or some of the ML models M1, M2, M3 of the pool P is between 10 to 100 megabytes or between 100 megabytes to 300 gigabytes.

Smaller models require less memory and computational power. Also, smaller models take up less disk space, making them easier to deploy on devices with limited storage capacity. Smaller models can be trained faster and with less data compared to larger models. This makes them more practical for scenarios where computational resources are limited or where quick iteration is needed. Also, smaller models generally have faster inference times, meaning they can process and generate responses more quickly, which is helpful for real-time applications like chatbots or mobile applications. Additionally, smaller models are more efficient in terms of energy consumption, which is important for sustainability and for running models on battery-powered devices. Moreover, despite their smaller size, smaller models can achieve high performance, especially when fine-tuned for specific tasks, striking a balance between efficiency and effectiveness, making them suitable for a wide range of applications. And, latency is drastically reduced with smaller models.

In some embodiments, the pool P of models can be predetermined. In some embodiments, the models of the pool can be asked for by the user. According to this embodiment, a first query of the user can be the choice of the models of the pool. In other words, method 300 can comprise a preliminary step 309 of choosing the models M of the pool P.

## Weight coefficients determination

Method 300 can comprise a preliminary step 310 of weighting the scores s1, s2, s3. Weight coefficients can be taken into account. A weight coefficient can be associated to each model M1, M2, M3, to equilibrate models that are too confident or too perplex on their capacities.

At step 310, users enter queries draft their queries with prompts of their choice through the human-machine interface 2. For each query, all the (complete) outputs of all the models M1, M2, M3 of the pool P are submitted to the user who classifies the responses by their relevancy.

The weight coefficients are then calculated based on the classification of all the responses.

## Other criteria

The comparison and selection steps 304, 305 can also take into account other criteria, like the cost of the outputs O1, O2, O3 and/or a model card, as detailed below, and/or the size of the models.

In some embodiments, the score models are each compared to a limit. At a first selecting step, are selected all the models with scores higher than the limit (for a confidence score) or with scores lower than the limit (for a perplexity score). For instance, if s1 and s1 are lower than a limit called PPL_limit whereas s3 is higher than PPL_limit, models M1 and M2 are selected at the first selecting step. Then, the costs of the outputs O1 and O2 are compared and the model selected is the one with the smaller cost.

## Model cards

In some embodiments, the criterion is based on model cards, the comparison comprising:

- associating the user query to an expertise domain, called query expertise domain,

- consulting each model card to determine whether the model considers itself as expert in the query expertise domain,

- selecting the model whose expertise is the closest to the query expertise domain.

## Advantages

The present technology has several advantages, among which:

- Accuracy: compared to using a single model for every query, leveraging model diversity and routing to the most confident one according to the present technology, improves overall result accuracy;

- Infrastructure optimization: though the present technology applies to models of any size, by combining small models together as one API ensures a quality of results that is competitive with bigger models whilst still relying on small-footprint models, thus leveraging smaller, cheaper or older GPUs;

- Infrastructure optimization: in the context of hosting LLMs, there is a long-tail of low usage models that waste resources to support this reminder traffic. By decoupling the model choice from the user, the present technology improves controlling of the lifecycle to the infrastructure provider;

- User experience improvement: the field of LLMs is a fast-moving and highly technical space in which models selection is a non-trivial task. By providing a unified API abstracting away the internals of model selection, the present technology lifts some of the model management and lifecycle complexity;

- The present technology can work on generalist hardware and does not need dedicated ones;

- The present technology is stateless and does not requires to pretrain a router.

## Computing environment

Figure 4 illustrates a computing device 1000, which may be used to implement and/or execute any of the methods described herein. In some embodiments, the computing environment 1000 may be implemented by any of a conventional personal computer, a network device and/or an electronic device (such as, but not limited to, a mobile device, a tablet device, a server, a controller unit, a control device, etc.), and/or any combination thereof appropriate to the relevant task at hand.

In some embodiments, the computing environment 1000 comprises various hardware components including one or more single or multi-core processors collectively represented by processor 1100, a solid-state drive 1200, a random access memory 1300, and an input/output interface 1500. The computing environment 1000 may be a computer specifically designed to operate a machine learning algorithm (MLA). The computing environment 1000 may be a generic computer system.

In some embodiments, the computing environment 1000 may also be a subsystem of one of the above-listed systems. In some other embodiments, the computing environment 1000 may be an "off-the-shelf generic computer system. In some embodiments, the computing environment 100 may also be distributed amongst multiple systems. The computing environment 1000 may also be specifically dedicated to the implementation of the present technology. As a person in the art of the present technology may appreciate, multiple variations as to how the computing environment 1000 is implemented may be envisioned without departing from the scope of the present technology.

Those skilled in the art will appreciate that processor 1100 is generally representative of a processing capability. In some embodiments, in place of or in addition to one or more conventional Central Processing Units (CPUs), one or more specialized processing cores may be provided. For example, one or more Graphic Processing Units 1111 (GPUs), Quantum Processing Units (QPUs), Tensor Processing Units (TPUs), and/or other so-called accelerated processors (or processing accelerators) may be provided in addition to or in place of one or more CPUs.

System memory will typically include random access memory 1300, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 1200 is shown as an example of a mass storage device, but more generally such mass storage may comprise any type of non-transitory storage device configured to store data, programs, and other information, and to make the data, programs, and other information accessible via a system bus 1600. For example, mass storage may comprise one or more of a solid state drive, hard disk drive, a magnetic disk drive, and/or an optical disk drive.

Communication between the various components of the computing environment 1000 may be enabled by a system bus 1600 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 1500 may enable networking capabilities such as wired or wireless network communications. As an example, the input/output interface 1500 may comprise a networking interface such as, but not limited to, a network port, a network socket, a network interface controller and the like. Multiple examples of how the networking interface may be implemented will become apparent to the person skilled in the art of the present technology. For example the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 1500 may be coupled to a touchscreen 1900 and/or to the one or more internal and/or external buses 1600. The touchscreen 1900 may be part of the display. In some embodiments, the touchscreen 1900 is the display. The touchscreen 190 may equally be referred to as a screen 190. In the embodiments illustrated in Figure 1 , the touchscreen 1900 comprises touch hardware 1940 (e.g., pressure-sensitive cells embedded in a layer of a display allowing detection of a physical interaction between a user and the display) and a touch input/output controller 1920 allowing communication with the display interface 1400 and/or the one or more internal and/or external buses 1600. In some embodiments, the input/output interface 1500 may be connected to a keyboard (not shown), a mouse (not shown) or a trackpad (not shown) allowing the user to interact with the computing environment 1000 in addition to or instead of the touchscreen 1900.

According to some implementations of the present technology, the solid-state drive 1200 stores program instructions suitable for being loaded into the random access memory 1300 and executed by the processor 1100 for executing acts of one or more methods described herein. For example, at least some of the program instructions may be part of a library or an application.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that these steps may be combined, subdivided, or re-ordered without departing from the teachings of the present technology. Accordingly, the order and grouping of the steps is not a limitation of the present technology.

**Claims**

**1.** A computer-implemented method for generating content to a user, comprising:

- receiving an input prompt from the user;
- accessing a first machine-learning (ML) model;
- accessing a second ML model, distinct from the first ML model;
- generating a first output by inputting to the first ML model at least a portion of the input prompt, the first output comprising a first series of tokens and a first series of probabilities associated with the first series of tokens;
- generating a second output by inputting to the second ML model the at least a portion of the input prompt, the second output comprising a second series of tokens and a second series of probabilities associated with the second series of tokens;
- comparing the first output with the second output;
- selecting, based on the comparison of the first and second outputs, one of the first and second ML models as a selected ML model to be used for generation of content to the user;
- generating, by the selected one of the first and second ML models, based on the input prompt, content to the user; and
- outputting the content to the user.

**2.** The method of claim 1, wherein accessing the first and/or second ML models is executed by:

- accessing a processor and a computer-readable memory coupled to the processor that operate the first and/or second ML models; and/or
- querying an Application Programming Interface (API) which in turn queries one of the first and/or second ML models.

**3.** The method of any one of claims 1 and 2, wherein comparing the first output with the second output comprises:

- computing a first score associated with the first ML model;
- computing a second score associated with the second ML model; and
- determining which one of the first and second scores is the highest or the lowest.

4. The method of claim 3, wherein the computing of the first score and/or the computing of the second score comprises:

- multiplying at least some probabilities of the first series of probabilities; and
- multiplying at least some probabilities of the second series of probabilities.

5. The method of claim 3, wherein the computing of the first score and/or the computing of the second score comprises:

- summing a logarithm of at least some probabilities of the first series of probabilities; and
- summing a logarithm of at least some probabilities of the second series of probabilities.

6. The method of any one of claims 1 to 5, wherein the number of tokens of the first series of tokens and the number of tokens of the second series of tokens is fixed or variable.

7. The method of any one of claims 1 to 6, wherein the number of tokens of the first series of tokens and the number of tokens of the second series of tokens is comprised between 5 and 20.

8. The method of any one of claims 1 to 7, wherein the computing of the first score and/or the computing of the second score comprises associating a first weight to the first score and a second weight to the second score.

9. The method of claim 8, wherein at least one of the first and second weights are computed by executing:

- prompting each one of the first and second ML models with the input prompt;
- generating the first output by the first ML model;
- generating the second output by the first ML model;
- outputting the first and second outputs to the user;
- obtaining, from the user, a classification of the first and second outputs; and
- adjusting the first and second weights based on the classification of the first and second outputs.

10. The method of any one of claims 1 to 9, wherein the ML models operate from 1 million to 175 billions parameters.

11. The method of any of the preceding claims, further comprising:

- receiving another input prompt from the user;
- accessing the first machine-learning (ML) model;
- accessing the second ML model;
- generating a first output by inputting to the first ML model at least a portion of the input prompt, the first output comprising a first series of tokens and a first series of probabilities associated with the first series of tokens;
- generating a second output by inputting to the second ML model the at least a portion of the input prompt, the second output comprising a second series of tokens and a second series of probabilities associated with the second series of tokens;
- comparing the first output with the second output;
- selecting, based on the comparison of the first and second outputs, one of the first and second ML models as a selected ML model to be used for generation of content to the user;
- generating, by the selected one of the first and second ML models, based on the input prompt, content to the user; and
- outputting the content to the user.

11. The method of any of claims 1 to 10, wherein selecting one of the first and second ML models further comprises:

- associating an expertise domain to the input prompt;
- assessing metadata (model card) associated with the first and second ML models, the metadata comprising indications of one or more expertise domains associated with the first and second ML models; and
- selecting the one of the first and second ML models based on a similarity of the expertise domain associated with the input prompt and the indications of the metadata associated with the first and second ML models.

12. A computer-implemented system configured to perform the method of any one of claims 1 to 11.

13. A computer-readable medium comprising instructions causing to perform the method of any one of claims 11 to 12.

100

112 → 114 → 116

110

108

106

104

130

Fig. 1

101a

101b

101c

102

14

FIG. 2

FIG. 3

Weighting step /310

Choosing pool P /309

User query /301

Accessing each model M1, M2, M3 /302

M1 generates O1
M2 generates O2
M3 generates O3 /303

Comparing O1, O2, O3 /304

Selecting M1 or M2 or M3
depending on s1, s2, s3 /305

Accessing the selected model /306

The selected model generates final
output Of /307

Of sent to user /308

EP 4 749 527 A1

16

Figure 4

Europäisches
Patentamt
European
Patent Office
Office européen
des brevets

# EUROPEAN SEARCH REPORT

**Application Number**

EP 24 30 6952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/139635 A1 (ICERTIS INC [US]) 2 July 2020 (2020-07-02) * page 26 - page 27; claim 1; figure 6 * ----- | 1-13 | INV. G06N3/0475 G06N20/00 |
| X | XIA YU ET AL: "Which LLM to Play? Convergence-Aware Online Model Selection with Time-Increasing Bandits", PROCEEDINGS OF THE 1ST ACM WORKSHOP ON LEO NETWORKING AND COMMUNICATION, ACMPUB27, NEW YORK, NY, USA, 13 May 2024 (2024-05-13), pages 4059-4070, XP059494229, DOI: 10.1145/3589334.3645420 ISBN: 979-8-4007-0335-5 * section 3.1; figure 1 * ----- | 1-13 | |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| Munich | 26 March 2025 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6952

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | Publication date | Patent family member(s) | Publication date |
|---|---|---|---|
| WO 2020139635 A1 | 02-07-2020 | DE 112019006389 T5 | 02-09-2021 |
| | | US 2020202256 A1 | 25-06-2020 |
| | | US 2022019943 A1 | 20-01-2022 |
| | | WO 2020139635 A1 | 02-07-2020 |

EPO FORM P0459

For more details about this annex : see Official Journal of the European Patent Office, No. 12/82